(19) Europäisches Patentamt / European Patent Office / Office européen des brevets

(11) **EP 4 517 378 A1**

(12) **EUROPEAN PATENT APPLICATION**

(43) Date of publication:
**05.03.2025 Bulletin 2025/10**

(21) Application number: **23194475.2**

(22) Date of filing: **31.08.2023**

(51) International Patent Classification (IPC):
**G01S 13/58** (2006.01)  **G01S 13/86** (2006.01)
**G01S 13/87** (2006.01)  **G01S 13/931** (2020.01)
**G01S 17/931** (2020.01)  **G01S 13/42** (2006.01)
**G01S 13/72** (2006.01)

(52) Cooperative Patent Classification (CPC):
**G01S 13/865; G01S 13/42; G01S 13/589;**
**G01S 13/878; G01S 13/931; G01S 17/931;**
G01S 13/723; G01S 2013/9318; G01S 2013/93185;
G01S 2013/9319

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GM Cruise Holdings LLC**
**San Francisco CA 94103 (US)**

(72) Inventors:
• **SANSON, Jessica Bartholdy**
  **85521 Ottobrunn (DE)**
• **KABAKCHIEV, Kalin Hristov**
  **85521 Ottobrunn (DE)**
• **RAMACHANDRAN, Aravind**
  **San Francisco, CA 94103 (US)**

(74) Representative: **Berkenbrink, Kai-Oliver et al**
**Patentanwälte Becker & Müller**
**Turmstrasse 22**
**40878 Ratingen (DE)**

(54) **LINEAR KALMAN FILTER WITH RADAR 2D VECTOR VELOCITY OBJECT ESTIMATION USING DISTRIBUTED RADAR NETWORK**

(57) A radar sensor system comprises a first radar sensor and at least a second radar sensor and one or more processors configured to perform acts comprising transmitting a first signal from a first transmit antenna in a first radar sensor and transmitting a second signal from a second transmit antenna in a second radar sensor. The acts further comprise detecting an object at the first radar sensor and the second radar sensor and estimating vector velocity information $v_x$ and $v_y$ for the object. The acts also comprise generating a radar measurement vector z that comprises position information $p_x$ and $p_y$ for the object and incorporating the vector velocity information $v_x$ and $v_y$ into the radar measurement vector z. Additionally, the acts comprise iteratively performing a measurement update using the measurement vector z, with velocity information incorporated therein, and a linear Kalman filter until correct velocity values are determined.

**FIG. 6**

EP 4 517 378 A1

**Description**

BACKGROUND

Autonomous or assisted driving strategies have been facilitated through sensing an environment around a vehicle. Radar sensors are conventionally used in connection with detecting and classifying objects in an environment; advantages of radar over other types of sensors (such as cameras or lidar) include robustness in regard to lighting and weather conditions. Often, radar sensors are deployed with cameras and/or lidar sensors to provide different modes of detection and redundancy. In certain scenarios, performance of lidar and/or cameras is negatively impacted by environmental features, such as fog, rain, snow, bright sunlight, lack of adequate light, etc. Accordingly, in these scenarios, radar is relied heavily upon to detect and classify objects in the environment, while lidar and camera sensors are less heavily relied upon.

In connection with navigating an environment, an autonomous vehicle perceives objects surrounding the autonomous vehicle based upon sensor signals generated by sensor systems of the autonomous vehicle. For example, the autonomous vehicle may include a sensor system, such as a radar sensor system, for generating sensor signals. The autonomous vehicle also includes a centralized processing device that receives data based upon sensor signals generated by the sensor system and performs a variety of different tasks, such as detection of vehicles, pedestrians, and other objects. Based on an output of the processing device, the autonomous vehicle may perform a driving maneuver.

Radar sensor systems exhibit some advantages over other sensor systems such as lidar sensor systems and cameras with respect to their usage in autonomous vehicles. For instance, compared to cameras and lidar sensor systems, performance of radar sensor systems is more invariant to weather changes, such that data generated by a radar sensor system can be used to enable autonomous driving under certain weather conditions (such as heavy rain or snow). In addition, radar sensor systems are able to capture velocity information nearly instantaneously. Further, radar sensor systems have a greater range than cameras and lidar sensor systems.

Radar sensor systems emit radar signals into a surrounding environment. The radar sensor signals reflect off objects in the environment and the radar sensor system then detects the reflected radar signals. Conventionally, the radar sensor system is configured to construct data tensors based upon the reflected radar signals, where a data tensor has bins across several dimensions. Example dimensions include range, doppler, and beam. The radar sensor system then generates point clouds based upon the data tensors and transmits the point clouds to the centralized processing device, where the centralized processing device identifies objects in the environment of the autonomous vehicle based upon the point clouds.

Range resolution of a radar sensor system is a function of the bandwidth of a radar signal transmitted by the radar sensor system. All else being equal, employing a wider bandwidth radar signal to be transmitted by the radar sensor system generally provides a finer range resolution (as compared to range resolution provided by a radar sensor system that utilizes a narrower bandwidth radar signal). In various applications, such as radar sensor systems of vehicles (e.g., autonomous vehicles), it is desired to have relatively fine range resolution; thus, such systems commonly employ relatively wide bandwidth radar signals.

Lidar is another tracking technology that uses light instead of radio waves. When an object is detected using a radar sensor system in conjunction with a lidar system, fusion of the radar data with the lidar data is mathematically complicated. Increasing the speed and decreasing the complexity of fusion of radar data with lidar data is a problem that has not been sufficiently addressed.

SUMMARY

The following is a brief summary of subject matter that is described in greater detail herein. This summary is not intended to be limiting as to the scope of the claims.

Described herein are various technologies relating to radar sensor systems, and more specifically, radar (and lidar) systems employed in autonomous vehicles, aircraft, watercraft, and the like. With more particularity, various technologies described herein mitigate the need for two different Kalman models (linear for lidar and extended for radar) for tracking objects, facilitating the fusion of information from the radar sensor system with information from the lidar system. The implementation can be based in point cloud data or radar raw data using centralized processing.

Radar is useful for challenging driving scenarios, including different weather and lighting conditions, which makes it more robust technology when compared with other types of sensors such as camera and lidar. Many autonomous or assisted driving solutions focus on sensor fusion to improve the accuracy and reliability of the perception results, whereas radar is often used as a complement for cameras or lidars in the late fusion stages of processing. Facilitating the fusion of radar and lidar information earlier in the processing steps as described herein is advantageous.

When working with a lidar, "cartesian", linear values are employed. The mathematical formulas are implemented with linear functions of the type $y = ax + b$. However, with radar, the data is not linear. Radar detects objects in polar values, which makes the radar measurement a nonlinear model where:

$\rho$ (rho) : represents the distance to the object that is tracked;
$\varphi$ (phi) : represents the angle between the x-axis and the object;
$\rho\cdot$ (rhodot) : represents the change of $\rho$, resulting in a radial velocity;

$\varphi$ can be converted into cartesian/liner values ($p_x$ and $p_y$), but $v_x$ and $v_y$ are difficult to estimate directly from $\rho\cdot$. To solve this problem, a radar network architecture is provided that facilitates instantaneous or near instantaneous estimation of the $v_x$ and $v_y$ components of the velocity of objects. The architecture uses at least two radars with the same FOV, but which are rotated at different angles (e.g., -30°/30°, 10°/-15°, 20°/35°, etc.) relative to the target object. In another embodiment, one of the radars is not rotated (e.g., 0°/25°, -20°/0°, etc.).

In addition to allowing the radar data to be modeled in a linear way, like lidar, this technique also decreases the time (frames) needed to correctly predict movement of objects, since it informs the model directly of the vector velocity, allowing a better prediction of the movement of the object. Fast prediction of the movement of targets is important in autonomous vehicles.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

BRIEF DESCRIPTION OF THE DRAWINGS

Fig. 1 is a functional block diagram of an exemplary radar sensor.
Fig. 2 illustrates a more detailed view of the hardware logic component.
Fig. 3 shows another example of a radar sensor unit.
Fig. 4 is an illustration of an exemplary radar network.
Fig. 5 illustrates an exemplary radar network comprising at least two MIMO radars with a common field of view (FOV).
Fig. 6 shows examples of a radar network with two radar sensors on one vehicle, the radar sensors having different rotation angles.
Fig. 7 illustrates a methodology for generating a radar point cloud for use in incorporating velocity data into a radar measurement vector z, to facilitate using a linear Kalman filter for the radar data.
Fig. 8 illustrates a methodology for incorporating radar velocity information into a measurement vector, z, to facilitate using a linear Kalman filter with radar data.
Fig. 9 is a functional block diagram of an exemplary AV.
Fig. 10 is an exemplary computing system.

DETAILED DESCRIPTION

Various technologies pertaining to automated vehicle (and other) radar and lidar systems are described herein. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component", "module", and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something and is not intended to indicate a preference.

Examples set forth herein pertain to an autonomous vehicle including a radar sensor system that facilitates streamlining radar data processing using a linear Kalman filter to enable rapid fusion with lidar data. Thus, the described techniques mitigate the need for two different Kalman models (linear for lidar and extended for radar) for tracking objects, facilitating the fusion of information from the radar sensor system with information from the lidar system.

Automotive radar sensor systems need an accurate and reliable sense of the environment around a vehicle. Among the commonly used sensors, radar is generally considered to be a robust and cost-effective solution, even in adverse driving scenarios, such as poor or strong lighting or bad weather. Radar data is often used in late fusion (track fusion) with other sensors such as lidar and camera. Lidar and radar are quite complementary in that they provide high angular resolution and range, and radar provides information about the radial velocity of objects.

One of the challenges of merging lidar data and radar data is the different format or model of data outputted by each type of sensor, which makes it necessary to use different models for each type of sensor. While lidar provides information in a linear ($p_x$, $p_y$) model, radar provides information in a polar model ($\rho$ (rho), $\varphi$ (phi), $\rho\cdot$ (rhodot)). So that information from both can be merged directly, different Kalman models are used for each type of sensor: linear Kalman for lidar, and extended Kalman for radar.

In extended Kalman, a polar-to-linear model conversion is conventionally performed with a Jacobian matrix because the radar velocity estimation is radial and not vector. The position $p_x$ and $p_y$ can be estimated with and $\varphi$, but it is difficult to estimate velocity $v_x$ and $v_y$ directly from $\rho\cdot$.

To overcome these problems and others, the described aspects provide a radar network architecture that facilitates rapid estimation of the $v_x$ and $v_y$ velocity of objects. This architecture is based on using at least two radars with the overlapping fields of view (FOV) that are rotated at different angles (e.g., 30°/30°, 10°/-15°, 20°/35°, etc.) rather than both facing straight ahead. In addition to being able to provide the $v_x$ and $v_y$ velocity, the described aspects allow the model to converge to the correct vector velocity faster than conventional approaches, mitigating a need for multiple measurements and updates. For situations where the object is detected with low response time, having the vector velocity information already estimated facilitates correctly predicting instantaneous motion for the detected object.

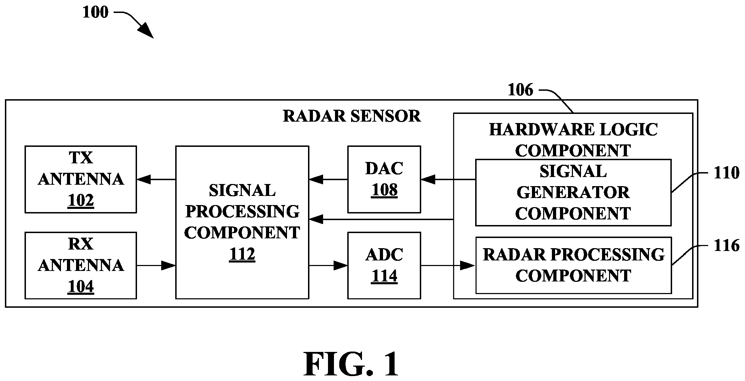

With reference now to Fig. 1, an exemplary radar sensor (also referred to as a radar sensor system) 100 is illustrated, in which various features, circuits, etc. described herein can be employed. The radar sensor 100 includes a transmit antenna 102, a receive antenna 104, and a hardware logic component 106. While one transmit antenna 102 and one receive antenna 104 are depicted in Fig. 1, it is contemplated that the radar sensor system 100 can include substantially any number or transmit antennas (each substantially similar to the transmit antenna 102) and/or substantially any number of receive antennas (each substantially similar to receive antenna 104). The hardware logic component 106 is configured to prepare radar signals that are transmitted by the transmit antenna 102, and to compute target solutions indicating estimated positions and/or velocities of objects based upon radar returns received by the receive antenna 104. In exemplary embodiments, various components of the radar sensor 100 can be integrated as a same system-on-a-chip (SoC). According to other embodiments, one or more components of the radar sensor system 100 can be discrete component(s). In various embodiments, the radar sensor 100 can be employed on a vehicle, such as a land vehicle, an aircraft, to identify positions and velocities of objects in the operational environment of the vehicle.

The radar sensor 100 further comprises one or more digital to analog converters (DACs) 108. The hardware logic component 106 comprises a signal generator component 110 that prepares radar signals for transmission by way of the transmit antenna 102. The signal generator component 110 is configured to control the DAC 108 to cause the DAC 108 to generate an analog radar signal for transmission by the transmit antenna 102. In other words, the signal generator component 110 generates digital values that, when received by the DAC 108, cause the DAC 108 to output an analog radar signal having various desired signal characteristics. Hence, the radar sensor 100 is configured as a digitally modulated radar sensor, wherein characteristics of radar signals output by the transmit antenna 102 are digitally controlled by the signal generator component 110 of the hardware logic component 106. For example, the signal generator component 110 can be configured to control the DAC 108 such that the radar sensor operates as a phase modulated continuous wave (PMCW) radar sensor. It is to be appreciated that these examples can be extended to other types of radar signals transmitted in steps, linear ramps, etc. (e.g., stepped orthogonal frequency division multiplexing (OFDM) radar, etc.).

The radar sensor 100 further includes an analog signal processing component 112. The signal processing component 112 is generally configured to perform various analog signal processing operations on analog signals that are to be output by the transmit antenna 102 and/or that are received by the receive antenna 104. By way of example, and not limitation, the signal processing component 112 can amplify a radar signal output by the DAC 108 to increase the power of the radar signal prior to transmission by way of the transmit antenna 102. In a further example, the signal processing component 112 can be configured to mix a radar signal output by the DAC 108 with a carrier signal to shift a center frequency of the radar signal. The signal processing component 112 can include any of various components that are configured to perform these various functions. For example, the signal processing component 112 can include mixers, amplifiers, filters, or the like. Functionality of the signal processing component 112 and its constituent components can be controlled by the hardware logic component 106. The transmit antenna 102 receives processed radar signals from the signal processing component 112 and emits the radar signals into an operational environment of the radar sensor 100.

The receive antenna 104 receives radar returns from the operational environment. In exemplary embodiments, the radar returns received by the receive antenna 104 comprise reflections, from objects in the operational environment of the sensor 100, of radar signals emitted by the transmit antenna 102. It is to be understood that the radar returns received by the receive antenna 104 can further include reflections of radar signals emitted by other radar emitters that are active within the operational environment of the radar sensor 100. Responsive to receipt of radar returns from the operational environment of the sensor 100, the receive antenna 104 outputs an electrical signal that is indicative of the received radar returns. This electrical signal is referred to herein as a return signal and is transmitted along one or more transmission lines in the radar sensor 100, as distinct from radar returns that are received by the receive antenna 104 as radiated signals propagating through air or free space in the operational environment of the radar sensor 100.

The signal processing component 112 receives a return signal from the receive antenna 104. The signal processing component 112 is configured to perform various analog signal processing operations over return signals received from the receive antenna 104. By way of example, and not limitation, the signal processing component 112 can perform various mixing, filtering, and amplification operations on return signals output by the receive antenna 104. The signal processing component 112 can be configured to perform various of these signal processing operations (e.g., mixing) based further upon a radar signal transmitted by the transmit antenna 102.

The radar sensor 100 further comprises one or more ADCs 114 that receive a processed return signal from the signal processing component 112. The ADC 114 digitally samples the return signal and outputs digital values that are indicative of amplitude of the return signal over time. These digital values are collectively referred to herein as radar data. The radar data output by the ADC 114 are indicative of the radar returns received by the receive antenna 104.

The hardware logic component 106 receives the radar data from the ADC 114. The hardware logic component 106 further comprises a radar processing component 116. The radar processing component 116 is configured to compute positions and/or velocities of targets in the operational environment of the radar sensor 100 based upon the radar data. In a non-limiting example, the radar processing component 116 can compute a range, a bearing, and/or a velocity of a target in the operational environment of the sensor 100 based upon the radar data.

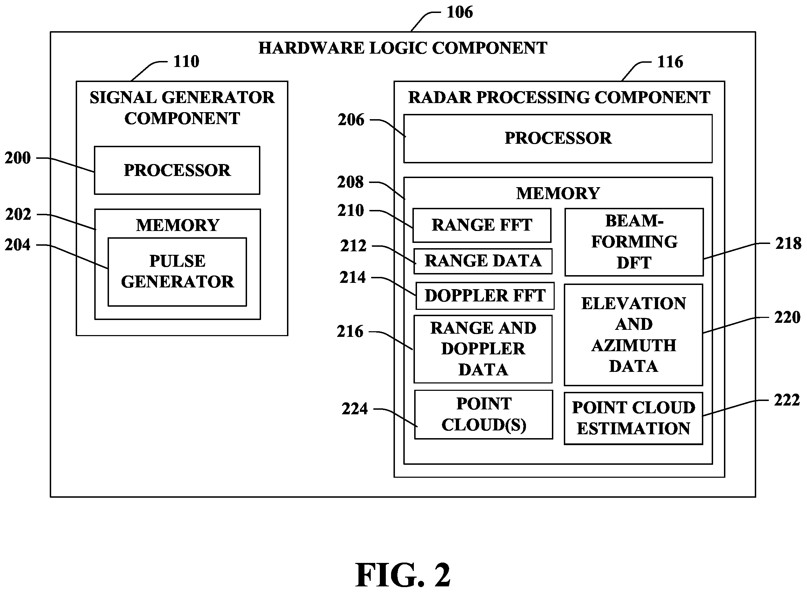

With reference now to Fig. 2, a more detailed view of the hardware logic component 106 is illustrated. The hardware logic component 106 comprises the signal generator component 110 and the radar processing component 116, as discussed with regard to Fig. 1. The signal generator component 110 comprises a processor 200 and a memory 202 configured to provide certain functionality as described herein. For example, the memory 202 can store computer-executable instructions that, when executed by the processor 200, cause the signal generator component 110 to perform certain acts. The memory 202 comprises a ramp/pulse generator component 204 that generates ramps/pulses (depending on the type of radar sensor system) for transmission. In one embodiment, the ramp/pulse generator component 204 performs time division multiplexing and/or frequency division multiplexing on the signals to be transmitted.

The radar processing component 116 comprises a processor 206 and a memory 208 configured to provide certain functionality as described herein. For example, the memory 208 can store computer executable instructions that, when executed by the processor 206, cause the radar processing component 116 to perform certain acts. The memory 208 comprises a range fast Fourier transform (FFT) component 210 that is executed on a digitized signal received from an ADC, such as the ADC 114 of Fig. 1, to generate range data 212 for objects detected in a received radar return. A Doppler FFT 214 is executed on the range data to generate range and Doppler data 216. A discrete Fourier transform (DFT) 218 is then executed on the range and Doppler data to generate elevation and azimuth data 220. A point cloud estimation component 222 is executed to generate one or more point clouds 224 representing at least the range data 212, the range and Doppler (velocity) data 216, and the elevation and azimuth data 220. However, it will be appreciated that the point cloud is not limited to representing only these data types. Rather, the point cloud can also include data points representing other data types, including but not limited to point density data, radar cross-section (RCS) data, , etc.).

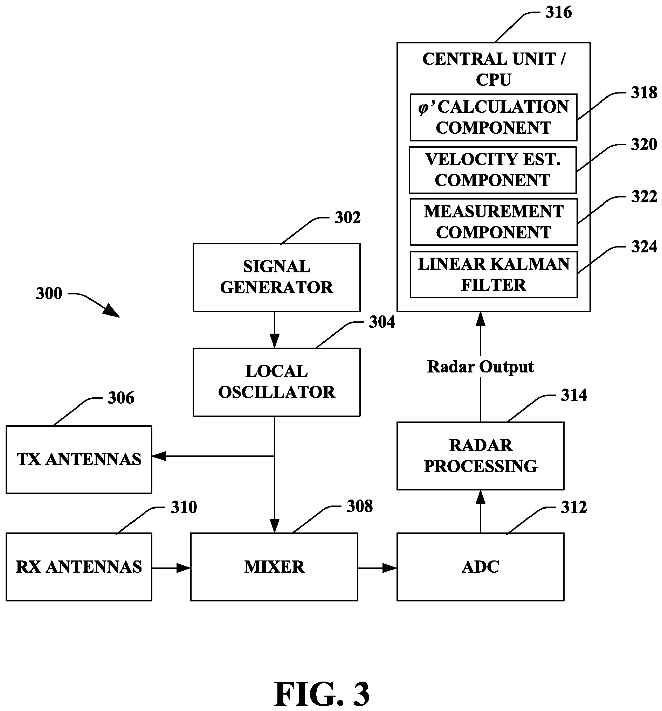

Fig. 3 shows another example of a radar sensor unit 300. The sensor 300 comprises a signal generator 302 that provides a signal to a local oscillator 304. The local oscillator 304 adjusts the signal for transmission via one or more transmit antennas 306. The local oscillator 304 also provides the transmit signal to a mixer 308, which combines the transmit signal with signals that have been reflected by an object and received by one or more receive antennas 310. The combined signal is then provided by the mixer 308 to an ADC 312, which digitizes the combined signal and provides the digitized signal to a radar processing component 314.

The radar processing unit 314 performs various acts on the digitized signal and provides functionality similar or identical to the functionality provided by the radar processing component 116 of the hardware logic component 106 (see, e.g., Figs. 1 and 2). The radar processing component 314 generates one or more point clouds, which are then transmitted to a central processing unit or computer (CPU) 316 for central processing.

For example, the central unit 316 can receive raw data or point cloud data from two (or more) radar units (Radar1 and Radar2) having overlapping fields of view (FOV). One or both radar units can be rotated by a desired angle relative to normal (i.e., straight ahead) as described herein. The central unit 316 executes a $\varphi'$ calculation component 318 that, for each radar, determines an angle $\theta$ at which the radar is rotated relative to normal, and subtracts a detected angle of a reflected signal $\varphi$ (relative to normal) from the rotation angle $\theta$ to calculate a rotated angle of reflection $\varphi'$. This value is then used for position and velocity estimation ($v_x$, $v_y$) upon execution of a velocity estimation component 320 by the central unit 316. The central unit 316 executes a measurement component 322 that generates a measurement vector that includes position information ($p_x$, $p_y$) and into which the velocity information ($v_x$, $v_y$) is incorporated. The central unit executes a linear Kalman filter 324 using the measurement vector z (with velocity information incorporated) in order to update the velocity estimations until correct velocity values $v_x$, $v_y$ are converged upon. The processed radar information can be fused with lidar information received from one or more lidar sensors (not shown).

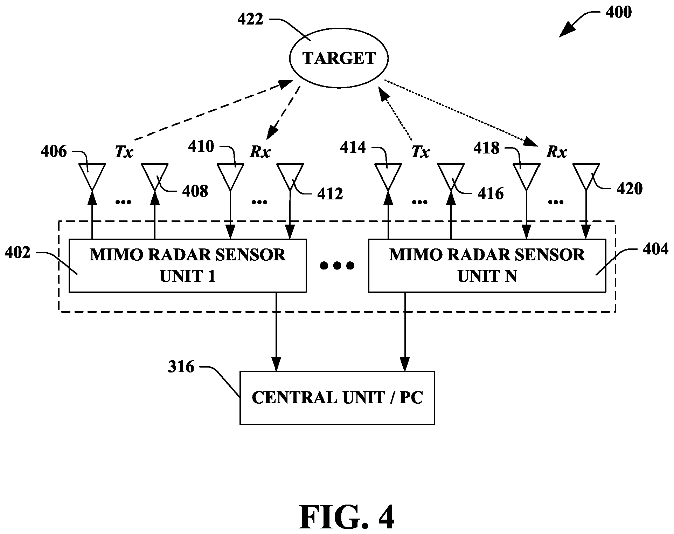

Fig. 4 is an illustration of a radar network 400 such as may be employed in conjunction with various features described herein. The radar network 400 comprises a first MIMO radar sensor unit 402 through an Nth radar sensor unit 404 (wherein N is an integer greater than 1), that provide one or both of point cloud data and raw data to a central unit 316. The first MIMO Radar sensor unit 402 comprises a plurality of transmit antennas 406, 408, and a plurality of receive antennas 410, 412. Similarly, the Nth MIMO radar sensor unit 404 comprises a plurality of transmit antennas 414, 416, and a plurality of receive antennas 418, 420. Transmit antennas 406, 408 transmit a signal from the first radar sensor unit 402, the signal being reflected by a target 422, and the reflected signal being received by the plurality of receive antennas 410, 412. Transmit antennas 414, 416 transmit a signal from the second radar sensor unit 404, the signal being reflected by the target 422, and the reflected signal being received by the plurality of receive antennas 418, 420.

In one embodiment, the MIMO radar sensor units 402, 404 transmit raw radar data to the central unit 316 for processing and velocity and/or range disambiguation. In another embodiment, the MIMO radar sensor units 402, 404 process the received signals and generate respective point clouds including at least velocity and range data, which are transmitted to the central unit 316 for processing. The central unit 316 processes the received radar data as described herein with regard to Figs. 1-3 and 5-8.

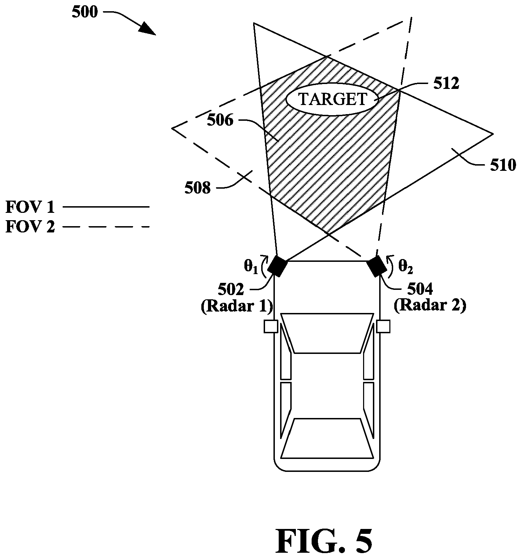

Fig. 5 illustrates a radar network 500 comprising at least two MIMO radars 502, 504 with a common FOV 506. The common FOV 506 represents an area of overlap of the FOV 508 of the first radar 502 with the FOV 510 of the second radar 504. A target object 512 is also shown passing through the common FOV 506.

In one embodiment, the signal received at the central unit/CPU (not shown in Fig. 5; See Fig. 3) is already processed by each radar 502, 504 (point cloud estimation). In another embodiment, the raw data of each radar 502, 504 can be sent to the central unit/CPU, and central processing is performed by the central unit/CPU. In yet another embodiment, one radar can send processed point cloud data while the other transmits raw data for processing by the central unit. Moreover, the signal received from each radar can be merged into a single signal using beamforming, resulting in aperture/resolution equivalent to the total space/distance between the two sensors.

With continued reference to Figs. 1-5, Fig. 6 illustrates an example of a radar network architecture and technique that facilitate instantaneously or nearly instantaneously estimating the velocity vector ($v_x$ and $v_y$) of objects for use in linear models. The approach uses at least two radars with the same FOV that are rotated at different angles ($\theta_1$, $\theta_2$; e.g. -30°/30°, 10°/-15°, 20°/35°, etc.). The different rotation of each radar on the network permits the velocity vector to be extracted via centralized processing of the data from the two radars. The instantaneous estimation of $v_x$ and $v_y$ described herein permits linear models to fuse radar information sooner than can be performed using conventional approaches. The $v_x$ and $v_y$ velocity information also permits the predictive models to converge to the correct vector velocity much faster than conventional approaches by not requiring multiple measurements and updates. For situations where the object is detected with low response time, having the vector velocity information already estimated allows a correct instantaneous motion prediction for the detected object.

When estimating the velocity vector using a radar network, the approach involves using two or more radars on the network. Each radar in the network has a different rotation/orientation so that the two radars can estimate the object at different angles. The angular difference between the two radars is proportional to the accuracy of the estimation. The radial velocity of an object estimated by a radar depends on the vector components of the velocity $v_x$ and $v_y$ (assuming $v_z = 0$), and the azimuth angle ($\varphi$) and elevation angle ($\varepsilon$) at which the target is illuminated, given by:

$$\dot{\rho} = (v_x)\cos(\varphi)\sin(\varepsilon) + (v_y)\sin(\varphi)\sin(\varepsilon).$$

On different sensors, the object can have different radial velocities $v_r$:

$$Sensor\ 1\ (s_1) \to v_{r1} = (v_x)cos(\varphi_1)sin(\varepsilon_1) + (v_y)sin(\varphi_1)\ sin(\varepsilon_1)$$

$$Sensor\ 2\ (s_2) \to v_{r2} = (v_x)cos(\varphi_2)sin(\varepsilon_2) + (v_y)sin(\varphi_2)\ sin(\varepsilon_2)$$

The elevation ($\varepsilon$) component can be isolated:

$$\rho\dot{}_1 / sin(\varepsilon_1) = (v_x)cos(\varphi_1) + (v_y)sin(\varphi_1)$$

$$\rho\dot{}_2 / sin(\varepsilon_2) = (v_x)cos(\varphi_2) + (v_y)sin(\varphi_2)$$

To facilitate the mathematical demonstration, let's consider $\varepsilon_1 = \varepsilon_2 = 90°$, and discard it from the equation. Thus:

$$\rho\dot{}_1 = (v_x)cos(\varphi_1) + (v_y)sin(\varphi_1)$$

$$\rho\dot{}_2 = (v_x)cos(\varphi_2) + (v_y)sin(\varphi_2)$$

If $\varphi_1 = \varphi_2$, both sensors estimate the radial velocity with the same value $\rho\dot{}_1 = \rho\dot{}_2$. But if $\varphi_1$ is different from $\varphi_2$ as described herein, the radial velocity values will be different and are directly related to the velocity vector ($v_x$ and $v_y$).

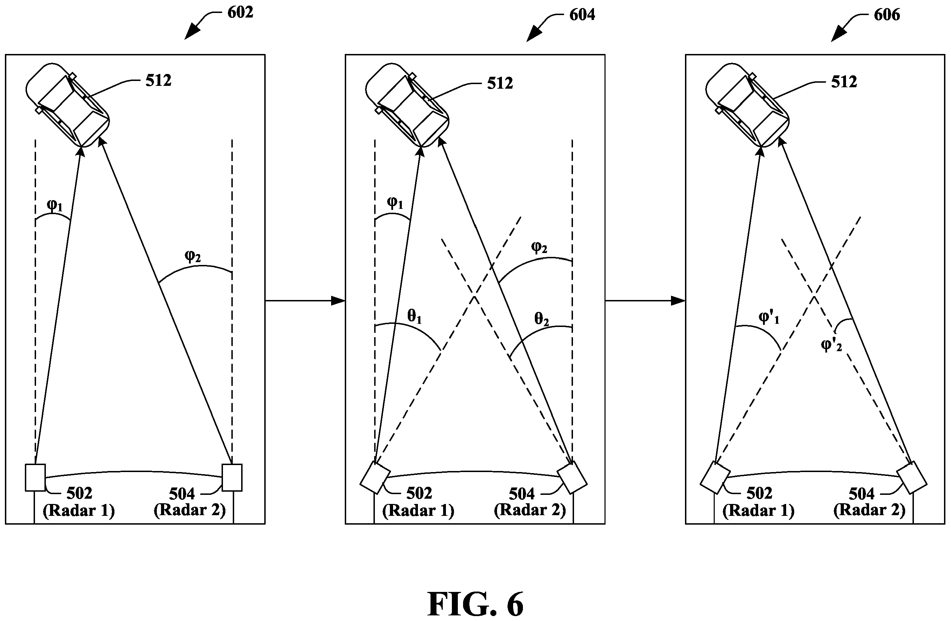

Fig. 6 shows a first example 602 of a radar network with two radars in one vehicle, with a rotation of zero degrees with respect to the x-axis of the vehicle. Radar 1 (si) 502 is positioned on Cartesian coordinates in relation to the axle midpoint of the vehicle at $s_{x1} = 1.5m$ and $s_{y1} = -0.5m$, while radar 2 ($s_2$) 504 is fixed at $s_{x2} = 1.5m$ and $s_{y2} = 0.5m$. Both radars have zero rotation ($\theta_1 = \theta_2 = 0$). The radar network illuminates the object/target 512 at the coordinates $x_t = 100m$, $y = 0.25m$. Due to the difference in the position of the radar sensors 502, 504 on the vehicle, each sensor estimates the target object with a different angle ($\varphi$) and range ($\rho$), $\rho_1$ and $\varphi_1$ on Radar 1 502 and $\rho_2$ and $\varphi_2$ on Radar 2 504. The range and angle values for each sensor can be quite different for close targets, but nearly equal for targets at long distances. In the example 602, the absolute difference would be $\rho_1 - \rho_2 \approx .01m$, and $\varphi_1 - \varphi_2 = 0.5°$. A difference of 0.5 degrees generates a small difference in the estimated radial velocity on each of the radars ($\rho\dot{}_1 \approx \rho\dot{}_2$), which can make the vector velocity estimation process challenging.

However, by rotating the two radars with different rotations ($\theta_1 \neq \theta_2$) as shown in examples 604 and 606, both radars detect the target at different angles so that the estimated radial velocity value in each radar is different, which in turn simplifies vector estimation. The new angles are calculated as:

$$\varphi'_1 = \theta_1 - \varphi_1$$

$$\varphi'_2 = \theta_2 - \varphi_2$$

Thus, the greater the difference between $\theta_1$ and $\theta_2$, the greater the difference in the final angle estimated for the target.

For the new radial velocities, (disregarding the elevation ($\varepsilon$) component):

$$\rho\dot{}_1 = (v_x)cos(\varphi'_1) + (v_y)sin(\varphi'_1)$$

$$\rho\dot{}_2 = (v_x)cos(\varphi'_2) + (v_y)sin(\varphi'_2)$$

After the association of objects/detections between the two radars has been performed, the vector velocity can be directly estimated through an equations system with two variables ($v_x$ and $v_y$). If only one value of angle and velocity for the object is available, the determination of $v_x$ and $v_y$ can be done by isolating a variable in the first equation and estimating its value with the other equation. However, if multiple data points representing multiple values for angle and velocity of the object are available, the estimate can be made using linear least squares (e.g., Moore-Penrose inverse) such that:

$$V = X\backslash y; \; X = [\; cos(\varphi) \; sin(\varepsilon_1) \;, \; sin(\varphi) \; sin(\varepsilon_1) \;]; \; y = \rho\dot{}; \; V = [v_x \,, \, v_y]).$$

After estimating the velocity vector value of the object, the vector can be used as a parameter of linear measurement in prediction models such as Kalman filters, in the same way as lidar, with the advantage that the vector velocity of the object can be initialized with the measured value of the object itself.

According to another example, a linear Kalman filter with radar measurements using a velocity vector is considered. This example assumes a constant velocity model, although the described systems and methods are not limited thereto. For the lidar case, a state $x'$ and an uncertainty $P'$ are estimated at time $t+1$ from the previous states $x$ and $P$ at time $t$, such that:

$$x' = F\,x + u$$

$$P' = F\,P\,F^T + Q$$

where $F$ is a transition matrix from $t$ to $t+1$, $u$ is the noise, and $Q$ is a covariance matrix including noise.

During a measurement update step, position is updated along with the manner of prediction at the next step:

$$y = z - Hx'$$

$$S = HP'H^T + R$$

$$K = P'H^T\,inv(S)$$

$$x = x' + K\,y$$

$$P = (I - K\,H)\,P'$$

where $z$ is the measurement vector, $H$ is the measurement function, $y$ is the difference between the actual measurement and the prediction, $R$ is the sensor noise, $S$ is the system error, and $K$ is the Kalman Gain.

In lidar, the measurement vector z and the state vector x are defined as:

$$z = \begin{bmatrix} p_x \\ p_y \end{bmatrix} \qquad x = \begin{bmatrix} p_x \\ p_y \\ v_x \\ v_y \end{bmatrix}$$

The measurement function H is defined as:

$$H = \begin{bmatrix} 1 & 0 & 0 & 0 \\ 0 & 1 & 0 & 0 \end{bmatrix}$$

where $H$ is the matrix that projects a prediction of the object's current state into the measurement space of the sensor. For lidar, this means that velocity information is discarded from the state variable since the lidar sensor only measures position. The state vector x contains information about $[p_x, p_y, v_x, v_y]$, whereas the z vector only contain $[p_x, p_y]$. Multiplying $Hx'$ permits a comparison of the predicted $x$ and with the sensor-measured z value.

The transition matrix $F$ is defined as:

$$F(\Delta t) = \begin{bmatrix} 1 & 0 & \Delta t & 0 \\ 0 & 1 & 0 & \Delta t \\ 0 & 0 & 1 & 0 \\ 0 & 0 & 0 & 1 \end{bmatrix}$$

where $\Delta t$ is measurement interval time.

Next, an extended Kalman filter (EKF) is considered for the radar case. It is predicted that:

$$x' = F\,x + u$$

$$P' = F\,P\,F^T + Q$$

In a conventional measurement update step, the matrix H is replaced by a nonlinear function $h(x)$ such that $y = z - H_{x'}$ is replaced *by* $y = z - h(x')$. In the EKF radar measurement update step, a Jacobian Matrix $H_j$ is used to calculate $S, K$ and $P,$ such that:

$$H_j = \begin{bmatrix} \dfrac{p_x}{\sqrt{p_x{}^2 + p_y{}^2}} & \dfrac{p_y}{\sqrt{p_x{}^2 + p_y{}^2}} & 0 & 0 \\[2ex] -\dfrac{p_y}{p_x{}^2 + p_y{}^2} & \dfrac{p_x}{p_x{}^2 + p_y{}^2} & 0 & 0 \\[2ex] \dfrac{p_y(v_x p_y - v_y p_x)}{(p_x{}^2 + p_y{}^2)^{3/2}} & \dfrac{p_x(v_y p_x - v_x p_y)}{(p_x{}^2 + p_y{}^2)^{3/2}} & \dfrac{p_x}{\sqrt{p_x{}^2 + p_y{}^2}} & \dfrac{p_y}{\sqrt{p_x{}^2 + p_y{}^2}} \end{bmatrix}$$

and

$$y = z - h(x')$$

$$S = H_j P' H_j{}^T + R$$

$$K = P' H_j{}^T inv(S)$$

$$x = x' + K y$$

$$P = (I - K H_j) P'$$

To calculate y, equations that map the predicted location x' cartesian coordinates to polar coordinates are used. The predicted measurement vector x' is a vector containing values in the form $[p_x, p_y, v_x, v_y]$, but the radar sensors have the output in polar coordinates $(\rho, \varphi, \rho\cdot)$. In order to calculate $y$ for the radar sensor, $x'$ needs to be converted to polar coordinates. Thus, the function $h(x)$ maps values from cartesian coordinates to polar coordinates, and the radar equations become:

$$z = \begin{bmatrix} \rho \\ \varphi \\ \rho^\cdot \end{bmatrix} \qquad\qquad y = z - h(x')$$

$$\begin{bmatrix} \rho \\ \varphi \\ \rho^\cdot \end{bmatrix} \xleftarrow{h(x')} \begin{bmatrix} p'_x \\ p'_y \\ v'_y \\ v'_y \end{bmatrix} \qquad\qquad h(x') = \begin{bmatrix} \sqrt{p'^2_x + p'^2_y} \\ arctan(p'_y/p'_x) \\ \dfrac{p'_x v'_x + p'_y v'_y}{\sqrt{p'^2_x + p'^2_y}} \end{bmatrix}$$

Returning to the example considering a linear Kalman filter with radar measurements using a velocity vector, in this example it is predicted that:

$$x' = F x + u$$

$$P' = F P F^T + Q$$

In the measurement update step, now the matrix $H$ does not need to be replaced by a nonlinear function $h(x)$, and also the Jacobian Matrix $H_j$ does not need to be introduced. The equation format for the radar case is now the same as in the lidar case:

$$y = z - H\,x\,'$$

$$S = HP\,'H^T + R$$

$$K = P\,'H^T\,inv(S)$$

$$x = x\,' + K\,y$$

$$P = (\,I - K\,H\,)\,P\,'$$

The difference is in the measurement vector *z* and measurement function *H*. Since the lidar sensor only measures position, the *H* matrix projects the object's current state into the measurement space of the sensor. Therefore, in this step velocity information is discarded from the state variable since the lidar sensor only measures position. However, using the estimation of $v_x$ and $v_y$ as described herein, this information can be introduced in *z*. Thus, incorporating the $v_x$ and $v_y$ estimation information into the radar measurement vector *z*, the measurement vector *z* and measurement function *H* for a linear Kalman filter with a radar network becomes:

Lidar:

Radar:

$$z = \begin{bmatrix} p_x \\ p_y \end{bmatrix} \qquad \rightarrow \qquad z = \begin{bmatrix} p_x \\ p_y \\ v_x \\ v_y \end{bmatrix}$$

$$H = \begin{bmatrix} 1 & 0 & 0 & 0 \\ 0 & 1 & 0 & 0 \end{bmatrix} \rightarrow \qquad H = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

This approach makes the model much simpler than when using the EKF (conventionally used in radar measurements), and with the addition of the vectorial information of the instantaneous velocity in the measurements, makes the convergence on the correct $v_x$ and $v_y$ value in the estimation of movement *x* much faster. Thus, the described technique mitigates the need for two different Kalman models (linear for lidar and extended for radar) for tracking objects, facilitating the fusion of information from the radar sensor system with information from the lidar system.

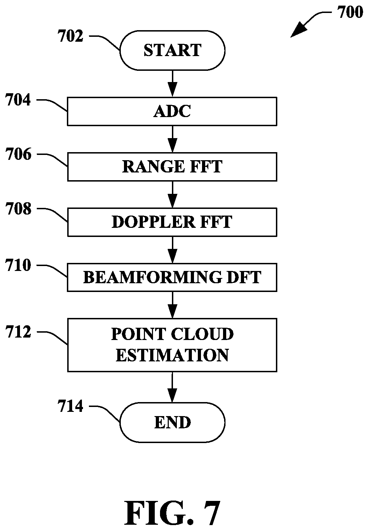

Figs. 7-8 illustrate exemplary methodologies relating to incorporating velocity information into a radar measurement vector *z*, for use with a linear Kalman filter in order to fuse the radar data with lidar data, which also uses a linear Kalman filter. While the methodologies are shown and described as being a series of acts that are performed in a sequence, it is to be understood and appreciated that the methodologies are not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodology can be stored in a computer-readable medium, displayed on a display device, and/or the like.

Turning now solely to Fig. 7, a methodology 700 is illustrated for generating a radar point cloud for use in incorporating velocity data into a radar measurement vector *z*, to facilitate using a linear Kalman filter with radar data. At 702, the method begins. At 704, at a given radar sensor, analog to digital conversion is performed on each signal acted by target object and received by the sensor. This step is performed for each array element (e.g., Tx/Rx pair). Once the received signals have been digitized, then at 706, a range fast Fourier transform is executed thereon to generate range data for the detected object. At 708, a Doppler fest for your transform is executed on the range data in order to generate range and Doppler data. At 710, a beamforming discrete Fourier transform is executed on the range and Doppler data to generate elevation and azimuth data. At 712 the range data, the range and Doppler data, and the elevation and azimuth data are used for point cloud estimation. The method terminates at 714. The point cloud is then provided to the central unit 316 for incorporation of velocity data from the point cloud into a radar measurement vector, $z$, to facilitate using a linear Kalman filter to filter the data for fusion with lidar data.

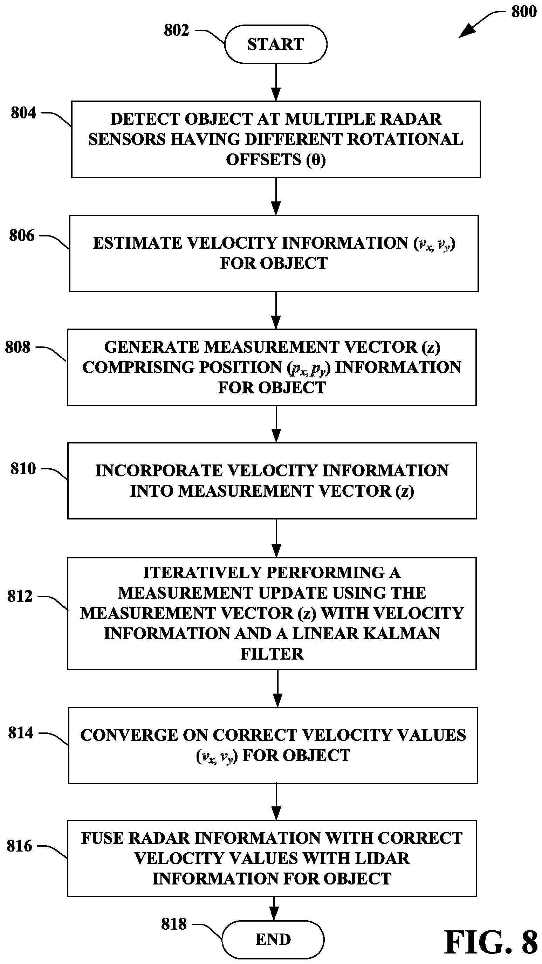

Fig. 8 illustrates a methodology 800 for incorporating radar velocity information into a measurement vector, $z$, to facilitate using a linear Kalman filter to with the radar measurement vector. At 802, the method begins. At 804, an object is detected by two or more radar sensors having overlapping FOVs. At 806, velocity information ($v_x$, $v_y$) is estimated by the radar sensors for the detected object. At 808, a measurement vector $z$ is generated comprising position information ($p_x$, $p_y$) for the detected object. At 810, the velocity information ($v_x$, $v_y$) is incorporated into the measurement vector $z$. At 812, a measurement update step is iteratively performed using the measurement vector $z$ (with velocity information incorporated therein) and a linear Kalman filter. This step produces updated velocity information and is iteratively performed until, at 814, the correct velocity values have been converged upon. The radar information can then be fused with lidar information for the detected object at 816. At 818, the method terminates.

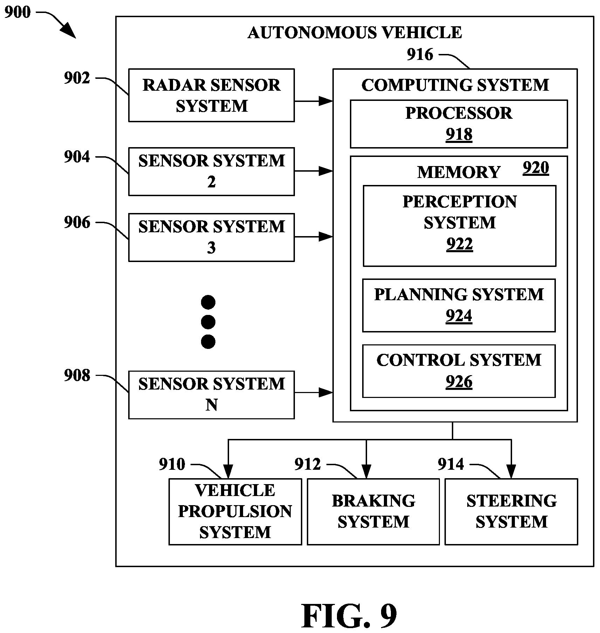

Various technologies described herein are suitable for use in connection with an autonomous vehicle (AV) that employs a radar sensor system to facilitate navigation about roadways. Referring now to Fig. 9, an exemplary AV 900 is illustrated, wherein the AV 900 can navigate about roadways without human conduction based upon sensor signals output by sensor systems of the AV 900. The AV 900 includes a plurality of sensor systems 902-908 (a first sensor system 902 through an Nth sensor system 908). The sensor systems 902-908 may be of different types. For example, the first sensor system 902 is a radar sensor system, the second sensor system 904 may be a LiDAR sensor system, the third sensor system 906 may be a camera (image) system, and the Nth sensor system 908 may be a sonar system. Other exemplary sensor systems include GPS sensor systems, inertial sensor systems, infrared sensor systems, and the like. The various sensor systems 902-908 are arranged about the AV 900. The sensor systems 902-908 are configured to repeatedly (e.g., continuously, or periodically) output sensor data that is representative of objects and conditions in the driving environment of the AV 900.

The AV 900 further includes several mechanical systems that are used to effectuate appropriate motion of the AV 900. For instance, the mechanical systems can include but are not limited to, a vehicle propulsion system 910, a braking system 912, and a steering system 914. The vehicle propulsion system 910 may be an electric engine, an internal combustion engine, or a combination thereof. The braking system 912 can include an engine brake, brake pads, actuators, a regenerative braking system, and/or any other suitable componentry that is configured to assist in decelerating the AV 900. The steering system 914 includes suitable componentry that is configured to control the direction of movement of the AV 900.

The AV 900 additionally comprises a computing system 916 that is in communication with the sensor systems 902-908 and is further in communication with the vehicle propulsion system 910, the braking system 912, and the steering system 914. The computing system 916 includes a processor 918 and memory 920 that includes computer-executable instructions that are executed by the processor 918. In an example, the processor 918 can be or include a graphics processing unit (GPU), a plurality of GPUs, a central processing unit (CPU), a plurality of CPUs, an application-specific integrated circuit (ASIC), a microcontroller, a programmable logic controller (PLC), a field programmable gate array (FPGA), or the like.

The memory 920 comprises a perception system 922, a planning system 924, and a control system 926. Briefly, the perception system 922 is configured to identify the presence of objects and/or characteristics of objects in the driving environment of the AV 900 based upon sensor data output by the sensor systems 902-908. The planning system 924 is configured to plan a route and/or a maneuver of the AV 900 based upon data pertaining to objects in the driving environment that are output by the perception system 922. The control system 926 is configured to control the mechanical systems 912-914 of the AV 900 to effectuate appropriate motion to cause the AV 900 to execute a maneuver planned by the planning system 924.

The perception system 922 is configured to identify objects in proximity to the AV 900 that are captured in sensor signals output by the sensor systems 902-908. By way of example, the perception system 922 can be configured to identify the presence of an object in the driving environment of the AV 900 based upon images generated by a camera system included in the sensor systems 904-908. In another example, the perception system 922 can be configured to determine a presence and position of an object based upon radar data output by the radar sensor system 902. In exemplary embodiments, the radar sensor system 902 can be or include the radar sensor 100, 300, 402 and/or 404. In such embodiments, the perception system 922 can be configured to identify a position of an object in the driving environment of the AV 900 based upon the estimated range output by the radar sensor 100, 300, 402 and/or 404.

The AV 900 can be included in a fleet of AVs that are in communication with a common server computing system. In these embodiments, the server computing system can control the fleet of AVs such that radar sensor systems of AVs operating in a same driving environment (e.g., within line of sight of one another, or within a threshold distance of one another) employ different pulse sequence carrier frequencies. In an exemplary embodiment, a radar sensor system of a first AV can be controlled so as not to transmit pulse sequences having same center frequencies as pulse sequences transmitted by a radar sensor system of a second AV at the same time. In further embodiments, the radar sensor system of the first AV can be controlled to transmit pulse sequences in a different order than a radar sensor system of a second AV. For instance, the radar sensor system of the first AV can be configured to transmit a set of pulse sequences at four different center frequencies A, B, C, and D in an order A, B, C, D. The radar sensor system of the second AV can be configured to transmit pulse sequences using a same set of center frequencies in a frequency order B, A, D, C. Such configurations can mitigate the effects of interference when multiple AVs that employ radar sensor systems are operating in a same driving environment.

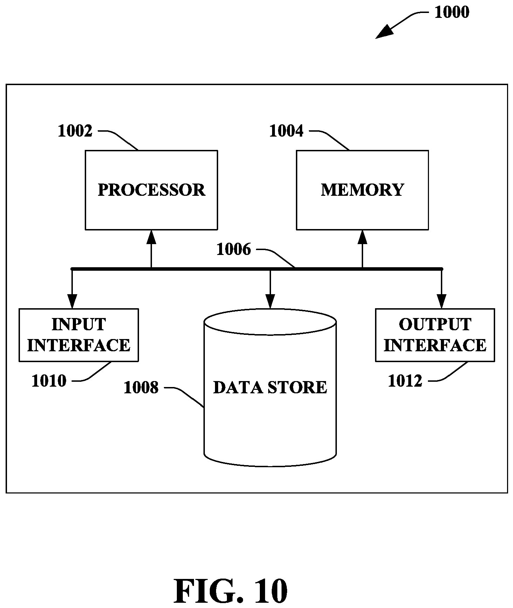

Referring now to Fig. 10, a high-level illustration of an exemplary computing device 1000 that can be used in accordance with the systems and methodologies disclosed herein is illustrated. For instance, the computing device 1000 may be or include the computing system 1216. The computing device 1000 includes at least one processor 1002 that executes instructions that are stored in a memory 1004. The instructions may be, for instance, instructions for implementing functionality described as being carried out by one or more modules, components, or systems discussed above or instructions for implementing one or more of the methods described above. The processor 1002 may be a GPU, a plurality of GPUs, a CPU, a plurality of CPUs, a multi-core processor, a combination of the foregoing, etc. The processor 1002 may access the memory 1004 by way of a system bus 1006. In addition to storing executable instructions, the memory 1004 may also store radar data, beamformed radar data, neural network configurations, etc.

The computing device 1000 additionally includes a data store 1008 that is accessible by the processor 1002 by way of the system bus 1006. The data store 1008 may include executable instructions, radar data, beamformed radar data, embeddings of these data in latent spaces, etc. The computing device 1000 also includes an input interface 1010 that allows external devices to communicate with the computing device 1000. For instance, the input interface 1010 may be used to receive instructions from an external computing device, etc. The computing device 1000 also includes an output interface 1012 that interfaces the computing device 1000 with one or more external devices. For example, the computing device 1000 may transmit control signals to the vehicle propulsion system 910, the braking system 912, and/or the steering system 914 by way of the output interface 1012.

Additionally, while illustrated as a single system, it is to be understood that the computing device 1000 may be a distributed system. Thus, for instance, several devices may be in communication by way of a network connection and may collectively perform tasks described as being performed by the computing device 1000.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include FPGAs, ASICs, Application-specific Standard Products (ASSPs), SOCs, Complex Programmable Logic Devices (CPLDs), etc.

Described herein are various technologies according to at least the following examples.

(A1) In an aspect, a method performed by a radar sensor system includes transmitting a first signal from a first transmit antenna in a first radar sensor. The method also includes transmitting a second signal from a second transmit antenna in a second radar sensor. The method further includes detecting an object at the first radar sensor and the second radar sensor. Additionally, the method includes estimating vector velocity information $v_x$ and $v_y$ for the object. Furthermore, the method includes generating a radar measurement vector z that comprises position information $p_x$ and $p_y$ for the object. Moreover, the method includes incorporating the vector velocity information $v_x$ and $v_y$ into the radar measurement vector *z*. The method also includes iteratively performing a measurement update using the measurement vector z, with velocity information incorporated therein and a linear Kalman filter.

(A2) In some embodiments of the method of (A1), the first radar sensor has a first rotation angle relative to normal.

(A3) In some embodiments of the method of (A2), the second radar sensor has a second rotation angle relative to normal, the second rotation angle being different than the first rotation angle.

(A4) In some embodiments of the method of at least one of (A1)-(A3), the method further includes fusing radar information with the correct velocity values with lidar information for the detected object.

(A5) In some embodiments of the method of at least one of (A1)-(A4), estimating the vector velocity information $v_x$ and $v_y$ comprises solving a two-equation system when only one value of angle and velocity is available for the object.

(A6) In some embodiments of the method of at least one of (A1)-(A5), estimating the vector velocity information $v_x$ and $v_y$ comprises using a linear least squares formula to estimate the velocity values when multiple data points representing multiple values for angle and velocity are available.

(A7) In some embodiments of the method of (A6), the linear least squares formula is a Moore-Penrose inverse linear least squares formula.

(A8) In some embodiments of the method of at least one of (A1)-(A7), the first and second radar sensors are deployed on an automated vehicle.

(B1) In another aspect, a radar system is configured to perform at least one of the methods disclosed herein (e.g., any of the methods of (A1)-(A8)).

(C1) In yet another aspect, a radar system includes a hardware logic component (e.g., circuitry), where the hardware logic component is configured to control elements of a radar system to perform at least one of the methods disclosed herein (e.g., any of the methods of (A1)-(A8)).

(D1) In yet another aspect, a radar sensor system includes a first radar sensor and at least a second radar sensor. The radar sensor system further includes one or more processors configured to perform acts including transmitting a first signal from a first transmit antenna in the first radar sensor. The acts further include transmitting a second signal from a second transmit antenna in the second radar sensor. The acts also include detecting an object at the first radar sensor and the second radar sensor. Additionally, the acts include estimating vector velocity information $v_x$ and $v_y$ for the object. Furthermore, the acts include generating a radar measurement vector $z$ that comprises position information $p_x$ and $p_y$ for the object. The acts also include incorporating the vector velocity information $v_x$ and $v_y$ into the radar measurement vector $z$. The acts further include iteratively performing a measurement update using the measurement vector z, with velocity information incorporated therein, and a linear Kalman filter.

(D2) In some embodiments of the radar sensor system of (D1), the first radar sensor has a first rotation angle relative to normal.

(D3) In some embodiments of the radar sensor system of (D2), the second radar sensor has a second rotation angle relative to normal, the second rotation angle being different than the first rotation angle.

(D4) In some embodiments of the radar sensor system of at least one of (D1)-(D3), estimating the vector velocity information $v_x$ and $v_y$ comprises solving a two-equation system when only one value of angle and velocity is available for the obj ect.

(D5) In some embodiments of the radar sensor system of at least one of (D1)-(D4), estimating the vector velocity information $v_x$ and $v_y$ comprises using a linear least squares formula to estimate the velocity values when multiple data points representing multiple values for angle and velocity are available.

(D6) In some embodiments of the radar sensor system of at least one of (D1)-(D5), the first and second radar sensors are deployed on an automated vehicle.

(E1) In another aspect, a central processing unit includes a computer-readable medium having stored thereon instructions which, when executed by a processor, cause the processor to perform certain acts. The central processing unit also includes one or more processors configured to execute the instructions. The acts include causing a first transmit antenna in a first radar sensor to transmit a first signal. The acts also include causing a second transmit antenna in a second radar sensor to transmit a second signal. The acts further include detecting an object based on a first received signal received at the first radar sensor responsive to the first signal and a second received signal received at the second radar sensor responsive to the second signal. Additionally, the acts include estimating vector velocity information $v_x$ and $v_y$ for the object. Moreover, the acts include generating a radar measurement vector z that comprises position information $p_x$ and $p_y$ for the object. The acts also include incorporating the vector velocity information $v_x$ and $v_y$ into the radar measurement vector z. The acts further include iteratively performing a measurement update using the measurement vector $z$, with velocity information incorporated therein, and a linear Kalman filter.

(E2) In some embodiments of the central processing unit (E1), the first radar sensor has a first rotation angle relative to normal, the second rotation angle being different than the first rotation angle.

(E3) In some embodiments of the radar sensor system of (E2), the second radar sensor has a second rotation angle relative to normal.

(E4) In some embodiments of the central processing unit of at least one of (E1)-(E3), estimating the vector velocity information $v_x$ and $v_y$ comprises solving a two-equation system when only one value of angle and velocity is available for the obj ect.

(E5) In some embodiments of the central processing unit of at least one of (E1)-(E4), estimating the vector velocity information $v_x$ and $v_y$ comprises using a linear least squares formula to estimate the velocity values when multiple data points representing multiple values for angle and velocity are available.

(E6) In some embodiments of the central processing unit of at least one of (E1)-(E5), the first and second radar sensors are deployed on an automated vehicle.

(F1) In still yet another aspect, use of any of the radar systems (e.g., any of (B1), (C1), (D1)-(D6) or (E1-E6)) to detect and classify a target is contemplated.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1. A method performed by a radar sensor system, the method comprising:

   transmitting a first signal from a first transmit antenna in a first radar sensor;
   transmitting a second signal from a second transmit antenna in a second radar sensor;
   detecting an object at the first radar sensor and the second radar sensor;
   estimating vector velocity information $v_x$ and $v_y$ for the object;
   generating a radar measurement vector $z$ that comprises position information $p_x$ and $p_y$ for the object;
   incorporating the vector velocity information $v_x$ and $v_y$ into the radar measurement vector $z$; and
   iteratively performing a measurement update using the measurement vector $z$, with velocity information incorporated therein and a linear Kalman filter.

2. The method of claim 1, wherein the first radar sensor has a first rotation angle relative to normal.

3. The method of claim 2, wherein the second radar sensor has a second rotation angle relative to normal, the second rotation angle being different than the first rotation angle.

4. The method of any one of claims 1-3, further comprising fusing radar information with the correct velocity values with lidar information for the detected obj ect.

5. The method of any one of claims 1-4, wherein estimating the vector velocity information $v_x$ and $v_y$ comprises solving a two-equation system when only one value of angle and velocity is available for the object.

6. The method of any one of claims 1-5, wherein estimating the vector velocity information $v_x$ and $v_y$ comprises using a linear least squares formula to estimate the velocity values when multiple data points representing multiple values for angle and velocity are available.

7. The method of claim 6, wherein the linear least squares formula is a Moore-Penrose inverse linear least squares formula.

8. The method of any one of claims 1-7, wherein the first and second radar sensors are deployed on an automated vehicle.

9. A radar sensor system comprising:

   a first radar sensor and at least a second radar sensor;
   one or more processors configured to perform acts comprising:

   transmitting a first signal from a first transmit antenna in the first radar sensor;
   transmitting a second signal from a second transmit antenna in the second radar sensor;
   detecting an object at the first radar sensor and the second radar sensor;
   estimating vector velocity information $v_x$ and $v_y$ for the object;
   generating a radar measurement vector $z$ that comprises position information $p_x$ and $p_y$ for the object;

incorporating the vector velocity information $v_x$ and $v_y$ into the radar measurement vector $z$; and iteratively performing a measurement update using the measurement vector $z$, with velocity information incorporated therein, and a linear Kalman filter.

10. The radar sensor system of claim 9, wherein the first radar sensor has a first rotation angle relative to normal.

11. The radar sensor system of claim 10, wherein the second radar sensor has a second rotation angle relative to normal, the second rotation angle being different than the first rotation angle.

12. The radar sensor system of any one of claims 9-11, wherein estimating the vector velocity information $v_x$ and $v_y$ comprises solving a two-equation system when only one value of angle and velocity is available for the object.

13. The radar sensor system of any one of claims 9-12, wherein estimating the vector velocity information $v_x$ and $v_y$ comprises using a linear least squares formula to estimate the velocity values when multiple data points representing multiple values for angle and velocity are available.

14. The radar sensor system of claim 13, wherein the linear least squares formula is a Moore-Penrose inverse linear least squares formula.

15. The radar sensor system of any one of claims 9-14, wherein the first and second radar sensors are deployed on an automated vehicle.

100

106

RADAR SENSOR

HARDWARE LOGIC
COMPONENT

| TX ANTENNA 102 | SIGNAL PROCESSING COMPONENT 112 | DAC 108 | SIGNAL GENERATOR COMPONENT |

110

| RX ANTENNA 104 | | ADC 114 | RADAR PROCESSING COMPONENT |

116

# FIG. 1

FIG. 2

316

CENTRAL UNIT / CPU

$\varphi'$ CALCULATION COMPONENT — 318

VELOCITY EST. COMPONENT — 320

MEASUREMENT COMPONENT — 322

LINEAR KALMAN FILTER — 324

300 →

SIGNAL GENERATOR — 302

LOCAL OSCILLATOR — 304

TX ANTENNAS — 306

RX ANTENNAS — 310

MIXER — 308

ADC — 312

RADAR PROCESSING — 314

Radar Output

**FIG. 3**

**FIG. 4**

EP 4 517 378 A1

FIG. 5

**FIG. 6**

EP 4 517 378 A1

FIG. 7

*800*

*802* — START

*804* — DETECT OBJECT AT MULTIPLE RADAR SENSORS HAVING DIFFERENT ROTATIONAL OFFSETS (θ)

*806* — ESTIMATE VELOCITY INFORMATION ($v_x$, $v_y$) FOR OBJECT

*808* — GENERATE MEASUREMENT VECTOR (z) COMPRISING POSITION ($p_x$, $p_y$) INFORMATION FOR OBJECT

*810* — INCORPORATE VELOCITY INFORMATION INTO MEASUREMENT VECTOR (z)

*812* — ITERATIVELY PERFORMING A MEASUREMENT UPDATE USING THE MEASUREMENT VECTOR (z) WITH VELOCITY INFORMATION AND A LINEAR KALMAN FILTER

*814* — CONVERGE ON CORRECT VELOCITY VALUES ($v_x$, $v_y$) FOR OBJECT

*816* — FUSE RADAR INFORMATION WITH CORRECT VELOCITY VALUES WITH LIDAR INFORMATION FOR OBJECT

*818* — END

**FIG. 8**

**FIG. 9**

EP 4 517 378 A1

1000

| 1002 | 1004 |
| --- | --- |
| PROCESSOR | MEMORY |

1006

| INPUT INTERFACE | DATA STORE | OUTPUT INTERFACE |
| --- | --- | --- |

1010

1008

1012

# FIG. 10

Europäisches
Patentamt

European
Patent Office

Office européen
des brevets

# EUROPEAN SEARCH REPORT

**Application Number**

EP 23 19 4475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/118390 A1 (NINOS ALEXANDROS [DE] ET AL) 20 April 2023 (2023-04-20) | 1-15 | INV.<br>G01S13/58 |
| Y | * paragraphs [0048], [0063], [0064], [0073] – [0076], [0082], [0103]; figures 2,5 * | 4,6-8, 13-15 | G01S13/86<br>G01S13/87<br>G01S13/931<br>G01S17/931 |
| Y | EP 3 654 064 A1 (BAYERISCHE MOTOREN WERKE AG [DE]) 20 May 2020 (2020-05-20)<br>* paragraphs [0002], [0035], [0040], [0042], [0047]; figure 1 * | 4,6-8, 13-15 | G01S13/42<br><br>ADD.<br>G01S13/72 |
| Y | US 2021/213962 A1 (PISHEHVARI AHMAD [DE] ET AL) 15 July 2021 (2021-07-15)<br>* paragraphs [0043], [0046] * | 4 | |

**TECHNICAL FIELDS SEARCHED (IPC)**

G01S

The present search report has been drawn up for all claims

| Place of search | Date of completion of the search | Examiner |
|---|---|---|
| Munich | 2 February 2024 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 4475**

This annex lists the patent family members relating to the patent documents cited in the above-mentioned European search report.
The members are as contained in the European Patent Office EDP file on
The European Patent Office is in no way liable for these particulars which are merely given for the purpose of information.

**02-02-2024**

| Patent document cited in search report | | Publication date | Patent family member(s) | | Publication date |
|---|---|---|---|---|---|
| US 2023118390 | A1 | 20-04-2023 | CN | 115993791 A | 21-04-2023 |
| | | | DE | 102021211743 A1 | 20-04-2023 |
| | | | US | 2023118390 A1 | 20-04-2023 |
| EP 3654064 | A1 | 20-05-2020 | CN | 113015924 A | 22-06-2021 |
| | | | EP | 3654064 A1 | 20-05-2020 |
| | | | US | 2021390331 A1 | 16-12-2021 |
| | | | WO | 2020099024 A1 | 22-05-2020 |
| US 2021213962 | A1 | 15-07-2021 | CN | 113189975 A | 30-07-2021 |
| | | | EP | 3851870 A1 | 21-07-2021 |
| | | | US | 2021213962 A1 | 15-07-2021 |

EPO FORM P0459

For more details about this annex : see Official Journal of the European Patent Office, No. 12/82